# EUROPEAN PATENT APPLICATION

(11) **EP 4 752 750 A1**
(43) Date of publication of application: **03.06.2026**
(21) Application number: 25216531.1
(22) Date of filing: 18.11.2025
(51) Int. Cl.: G06F 16/3329

(54) **INFORMATION PROCESSING APPARATUS, INFORMATION PROCESSING METHOD, AND NON-TRANSITORY COMPUTER READABLE MEDIUM**

(30) Priority: 27.11.2024 JP 2024206679
(71) Applicant: Toyota Jidosha Kabushiki Kaisha, Toyota-shi, Aichi-ken 471-8571 (JP)
(72) Inventor: OKUYAMA, Manabu, Toyota-shi, 471-8571 (JP); OKAMOTO, Masayuki, Toyota-shi, 471-8571 (JP); YAMAMURO, Naoki, Toyota-shi, 471-8571 (JP); TAKEUCHI, Yasuomi, Toyota-shi, 471-8571 (JP)
(74) Representative: TBK

(57) **Abstract**

An information processing apparatus includes an acquisition interface and a controller. The acquisition interface acquires a question from a user. Upon acquiring the question regarding know-how inputted by the user through the acquisition interface, the controller acquires, from a database storing a plurality of pieces of know-how information, one or more pieces of know-how information according to the content of the question. The controller displays an answer to the question based on specific know-how information included in the one or more pieces of know-how information. The controller further determines the necessity of modification to the specific know-how information, based on a response of the user to the answer.

## Description

### TECHNICAL FIELD

The present disclosure relates to an information processing apparatus, an information processing method, and a medium.

### BACKGROUND

Technology for generating, based on documents in a given domain, a dialogue bot specialized for that domain using a large language model is proposed. For example, see Patent Literature (PTL) 1.

### CITATION LIST

### Patent Literature

PTL 1: JP 2023-076413 A

### SUMMARY

In a dialogue system that outputs answers to questions, one or more pieces of know-how information that could be an answer to an input question may be retrieved from a database and displayed. However, when incorrect know-how information is stored in the database, it may not always be possible to provide a correct answer.

It would be helpful to enable modification of know-how information stored in a database in a dialogue system.

An information processing apparatus according to an embodiment of the present disclosure includes:
an acquisition interface configured to acquire a question from a user;
   and
a controller configured to perform operations including:
   upon acquiring the question regarding know-how inputted by the user through the acquisition interface, acquiring, from a database storing a plurality of pieces of know-how information, one or more pieces of know-how information according to the content of the question;
   displaying an answer to the question based on specific know-how information included in the one or more pieces of know-how information; and
   determining the necessity of modification to the specific know-how information, based on a response of the user to the answer.

An information processing method according to an embodiment of the present disclosure is an information processing method performed by an information processing apparatus, the information processing method including:
when a question regarding know-how is inputted by a user, acquiring, from a database storing a plurality of pieces of know-how information, one or more pieces of know-how information according to the content of the question;
displaying an answer to the question based on specific know-how information included in the one or more pieces of know-how information; and
determining the necessity of modification to the specific know-how information, based on a response of the user to the answer.

A medium according to an embodiment of the present disclosure stores a program configured to cause a computer to execute operations, the operations including:
when a question regarding know-how is inputted by a user, acquiring, from a database storing a plurality of pieces of know-how information, one or more pieces of know-how information according to the content of the question;
displaying an answer to the question based on specific know-how information included in the one or more pieces of know-how information; and
determining the necessity of modification to the specific know-how information, based on a response of the user to the answer.

According to the present disclosure, it is possible in a dialogue system to modify know-how information stored in a database based on a user's response.

### BRIEF DESCRIPTION OF THE DRAWINGS

In the accompanying drawings:
FIG. 1 is a block diagram illustrating a schematic configuration of a system including an information processing apparatus according to an embodiment of the present disclosure;
FIG. 2 is a sequence diagram illustrating a flow of information processing in the system of FIG. 1;
FIG. 3 is a diagram illustrating an example of a screen displayed on a display of a user terminal;
FIG. 4 is a diagram illustrating an example of the screen displayed on the display of the user terminal;
FIG. 5 is a diagram illustrating an example of the screen displayed on the display of the user terminal; and
FIG. 6 is a flowchart of determination processing executed by a controller of the information processing apparatus of FIG. 1.

### DETAILED DESCRIPTION

An embodiment of the present disclosure will be described below, with reference to the drawings.

### (Overview of System)

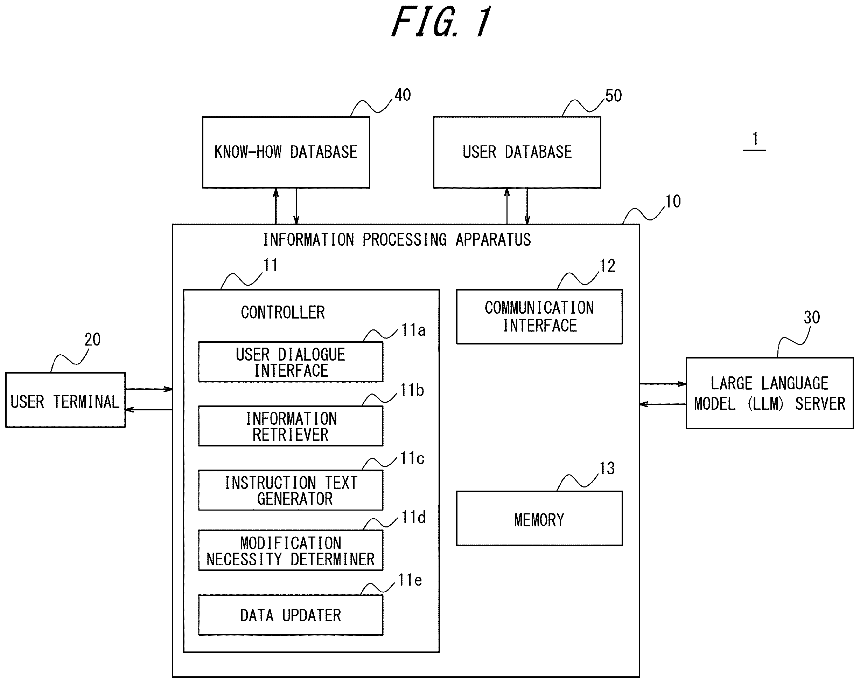

As illustrated in FIG. 1, a system 1 according to the embodiment of the present disclosure includes an information processing apparatus 10, a user terminal 20, a large language model (LLM) server 30, a know-how database 40, and a user database 50. The information processing apparatus 10 is communicably connected to each of the user terminal 20, the LLM server 30, the know-how database 40, and the user database 50 by any communication means including wired and wireless communication means.

In the system 1, a user can ask, using the user terminal 20, a question regarding know-how in a free style of writing. The know-how refers to specialized knowledge, skills, techniques, and the like. The know-how can be rephrased as knowledge. Information regarding the know-how may be hereinafter referred to as know-how information.

The information processing apparatus 10 receives the question from the user terminal 20, and acquires, from the know-how database 40, a group of know-how information the content of which is related to the question. The know-how information acquired by the information processing apparatus 10 from the know-how database 40 includes one or more pieces of know-how information. The information processing apparatus 10 generates an answer based on the group of know-how information acquired from the know-how database 40, and transmits the answer to the user terminal 20. The information processing apparatus 10 exchanges information with the user via the user terminal 20 in a dialogue format using text or voice. The information processing apparatus 10 may have the function of a so-called 'chatbot.'

The information processing apparatus 10 may receive an answer to the question from the LLM server 30, by transmitting, to the LLM server 30, the question from the user and the know-how information acquired from the know-how database 40. That is, the information processing apparatus 10 provides the function of Retrieval Augmented Generation (RAG). RAG is technology that improves the accuracy of answers by combining text generation by large language models with the retrieval of external information.

The LLM server 30 generates the answer to the question acquired from the information processing apparatus 10, based on the group of know-how information, which is acquired from the information processing apparatus 10 and is related to the content of the question. The LLM server 30 can extract necessary information from the group of know-how information, and generate the answer using an easily understandable expression corresponding to the question.

The information processing apparatus 10 can transmit the answer to the user terminal 20, and acquire the user's response to the answer. The user may input the response to the answer, as an evaluation for the answer such as 'good' or 'bad.' The information processing apparatus 10 determines, based on the user's response, whether modification to the know-how information, based on which the answer to the user's question has been generated, is necessary. The information processing apparatus 10 can accept a proposal of modification content from the user who has evaluated that modification to the know-how information is necessary. Upon determining that modification to the know-how information is necessary, the information processing apparatus 10 may modify the corresponding know-how information in the know-how database 40, based on the modification content proposed from the user up to that point.

Configurations of the system 1 will be hereinafter described in detail.

### (Information Processing Apparatus)

The information processing apparatus 10 is a computer such as a personal computer (PC) or a workstation. The information processing apparatus 10 is not limited to this and may be any general purpose electronic device or any other electronic device dedicated to the system 1. The information processing apparatus 10 may be a server belonging to a cloud computing system or another type of computing system. The information processing apparatus 10 includes a controller 11, a communication interface 12, and a memory 13.

The controller 11 includes at least one processor, at least one dedicated circuit, or a combination thereof. The processor is a general purpose processor, such as a central processing unit (CPU) or a graphics processing unit (GPU), or a dedicated processor dedicated to specific processing. The dedicated circuit is, for example, a field-programmable gate array (FPGA) or an application specific integrated circuit (ASIC). The controller 11 executes processes related to operations of the information processing apparatus 10 while controlling components of the information processing apparatus 10.

The controller 11 may include a user dialogue interface 11a, an information retriever 11b, an instruction text generator 11c, a modification necessity determiner 11d, and a data updater 11e. Each of these components may be a hardware module or a software module. The controller 11 can execute the processes described below as the functions of each component. Hereinafter, the processes executed by each component may be described as processes executed by the controller 11.

The user dialogue interface 11a realizes a dialogue interface with a user via the user terminal 20. The user dialogue interface 11a mediates dialogue between the user and the LLM server 30. The user dialogue interface 11a accepts a question from the user and presents, to the user, an answer to the question. The user dialogue interface 11a asks the user to evaluate the answer, and acquires an evaluation from the user. An evaluation result for the answer by the user may be selected from two-level evaluation results, i.e., a first evaluation result indicating a high evaluation and a second evaluation result indicating a low evaluation. The evaluation result for the answer by the user is included in the user's response to the answer.

The information retriever 11b instructs the know-how database 40 to retrieve information corresponding to a user's question, which is acquired from the user terminal 20 by the user dialogue interface 11a. The information retriever 11b retrieves, from the know-how database 40, know-how information related to the user's question. For example, when the user's question relates to an operation method of a specific machine, the information retriever 11b retrieves know-how information and the like including information on an operation manual of that machine and information registered by other users within the organization who have expertise related to that machine. The information acquired by the information retriever 11b may include a lot of information related to the user's question.

The instruction text generator 11c generates instruction text for the LLM server 30. The instruction text for the LLM server 30 is referred to as a 'prompt'. The instruction text generator 11c generates the instruction text that includes a user's question, know-how information acquired by the information retriever 11b, and an instruction to output an answer to the question along with identification information specifying know-how information used for that answer. By transmitting the user's question accompanied with the know-how information to the LLM server 30, it is easier for the controller 11 to acquire, from the LLM server 30, an appropriate answer based on the know-how information. Furthermore, by causing the LLM server 30 to output the identification information specifying the know-how information used for the answer, the controller 11 can confirm which know-how information among one or more pieces of know-how information transmitted by the LLM server 30 has been used to generate the answer.

The modification necessity determiner 11d determines the necessity of modification to know-how information used for an answer, by processing an evaluation result for the answer by a user, which has been acquired by the user dialogue interface 11a. The controller 11 may determine that modification to specific know-how information is necessary when an evaluation for the specific know-how information by a user is a second evaluation result indicating a low evaluation. The modification necessity determiner 11d may determine the necessity of modification to the know-how information by statistically processing evaluation results for the specific know-how from a plurality of users. Statistically processing includes calculating the ratio of the second evaluation results included in the evaluation results from the users.

Upon acquiring a second evaluation result indicating a low evaluation from a user, the modification necessity determiner 11d may retrieve and acquire, from the user database 50, proficiency information indicating proficiency of the user who has made the evaluation. When the proficiency information meets a predetermined requirement, the modification necessity determiner 11d determines that modification to specific know-how information is necessary. The predetermined requirement is a requirement indicating that the user's proficiency is high. The predetermined requirement includes, for example, that the length of service of the user in a field related to the know-how information is a predetermined number of years (for example, 5 years or 10 years) or more. The predetermined requirement includes, for example, that the user is certified as an expert in the field related to the know-how information.

The data updater 11e updates specific know-how information when the modification necessity determiner 11d has determined that modification to the know-how information is necessary. The data updater 11e may update data based on a proposal of modification content for the know-how information acquired from a user by the user dialogue interface 11a. For example, the data updater 11e may update the know-how information in other methods. For example, the data updater 11e may retrieve, from the user database 50, a user with high skill in a field related to the know-how information, which has been determined that modification is necessary. The data updater 11e may transmit, to the user with high skill, a notification to request modification to the know-how information, which has been determined that modification is necessary.

The communication interface 12 includes an interface for external communication that communicates with the user terminal 20, the LLM server 30, the know-how database 40, and the user database 50. The communication interface 12 may communicate with each component via a communication network such as the Internet. The interface for communication may be any interface for wired or wireless communication. For wired communication, the interface for communication is, for example, a Local Area Network (LAN) interface or Universal Serial Bus (USB). For wireless communication, the interface for communication is, for example, an interface compliant with a mobile communication standard such as Long Term Evolution (LTE), the 4th generation (4G) standard, or the 5th generation (5G) standard, or an interface compliant with a short-range wireless communication standard such as Bluetooth^{®} (Bluetooth is a registered trademark in Japan, other countries, or both). The communication interface 12 receives data to be used for operations of the information processing apparatus 10, and transmits data obtained by operations of the information processing apparatus 10 to the outside. The communication interface 12 functions as an acquisition interface that acquires a user's question from the user terminal 20.

The memory 13 includes at least one semiconductor memory, at least one magnetic memory, at least one optical memory, or a combination of at least two of these. The semiconductor memory is, for example, random access memory (RAM) or read only memory (ROM). The RAM is, for example, static random access memory (SRAM) or dynamic random access memory (DRAM). The ROM is, for example, electrically erasable programmable read only memory (EEPROM). The memory 13 functions as, for example, a main memory, an auxiliary memory, or a cache memory. The memory 13 stores programs and data to be used for operations of the information processing apparatus 10 and data obtained by operations of the information processing apparatus 10.

The memory 13 may store the number of evaluations and evaluation results made by users for each piece of know-how information stored in the know-how database 40. The memory 13 may store, for each piece of know-how information evaluated by the users, candidate text for modification and/or replacement based on modification proposals from the users.

Note that, the information processing apparatus 10 illustrated in FIG. 1 of the present embodiment has no input interface or output interface described, but may further include an input interface and an output interface. In other words, in addition to receiving (inputting) and transmitting (outputting) information via the communication interface 12, information may be input and output via the input and output interfaces included in the information processing apparatus 10.

The functions of the information processing apparatus 10 are realized by execution of a program according to an information processing method of the present embodiment by a processor corresponding to the controller 11. That is, the functions of the information processing apparatus 10 are realized by software. The program causes a computer to execute operations of the information processing apparatus 10, thereby causing the computer to function as the information processing apparatus 10. That is, the computer executes the operations of the information processing apparatus 10 in accordance with the program to thereby function as the information processing apparatus 10.

In the present embodiment, the program can be recorded on a computer readable recording medium. The computer readable recording medium includes a non-transitory computer readable medium and is, for example, a magnetic recording apparatus, an optical disc, a magneto-optical recording medium, or a semiconductor memory. The program is distributed, for example, by selling, transferring, or lending a portable recording medium such as a digital versatile disc (DVD) or a compact disc read only memory (CD-ROM) on which the program is recorded. The program may also be distributed by storing the program in a storage of an external server and transmitting the program from the external server to another computer. The program may be provided as a program product.

### (User Terminal)

The user terminal 20 is an information device such as a computer used by a user. The user terminal 20 includes general purpose devices and dedicated devices. The general purpose devices include PCs, tablet terminals, and smartphones. The user terminal 20 includes a processor, a communication interface, memory, and a display. The display may be a touch panel display that also serves as an input device. The user terminal 20 may further include input and output devices such as a keyboard, a microphone, a speaker, and a camera.

The user terminal 20 is capable of transmitting and receiving information to and from the information processing apparatus 10 via a communication interface. The user terminal 20 presents information to the user in conjunction with the information processing apparatus 10. The information presented to the user is displayed on a display of the user terminal 20. The user terminal 20 may function as a client of the information processing apparatus 10 when the information processing apparatus 10 operates as a server. Each function of the user terminal 20 may be executed by application software installed in the user terminal 20. A processor of the user terminal 20 may control each component of the user terminal 20 and execute processing of the user terminal 20 according to the application software.

The user terminal 20 can authenticate the user by the user's login name, password, and/or images acquired from a camera, or by other means. The user terminal 20 can display text and images on a display based on information received from the information processing apparatus 10. The user terminal 20 receives text information input from a touch panel, a keyboard, or other input means, and transmits the text information to the information processing apparatus 10. The user terminal 20 may be configured to perform voice recognition processing and voice synthesis processing. The user terminal 20 may convert text information received from the information processing apparatus 10 into voice, and output the voice from a speaker. The user terminal 20 may recognize the user's voice input from a microphone, and convert the user's voice into text information. The user terminal 20 may transmit the input text information to the information processing apparatus 10.

### (LLM Server)

The LLM server 30 is a general purpose or dedicated computer. The LLM server 30 is equipped with a large language model. The large language model is a natural language processing model generated by learning a large amount of text data. The large language model can be used for various types of natural language processing.

The LLM server 30 performs natural language processing on instruction text acquired from the information processing apparatus 10, and analyzes instruction content contained in the instruction text. The LLM server 30 extracts, according to the instruction text, specific know-how information necessary to answer a question in the instruction text from know-how information included in the instruction text, and generates an answer using that know-how information. The LLM server 30 can perform analysis, summarization, and the like of the specific know-how information to answer the question. According to the instruction text, the LLM server 30 replies to the information processing apparatus 10 with the answer to the question included in the instruction text and identification information identifying the specific know-how information used to generate the answer to the question. The identification information is information that can identify each piece of know-how information stored in the know-how database 40.

### (Know-how Database)

The know-how database 40 is a database that accumulates know-how information. The know-how database 40 is, for example, a vector database, but is not limited to this. The know-how database may be another database such as a hierarchical database, a network database, a relational database (RDB), or an object database (ODB). The know-how information includes information obtained based on practical experience. In the present disclosure, the know-how information includes information accumulated within an organization such as a company, a municipality, or a research institution. However, the know-how information is not limited to information used in a closed environment within the organization, and may include information published outside the organization.

The know-how information stored in the know-how database 40 may include manual documents within the organization, expertise information registered by users, information on methods that have been successful in the past, and the like. The know-how information may be indexed in various methods. The know-how database 40 may include information vectorizing text of the know-how information into numerical vectors. The know-how information may be classified and organized by fields, applications, and/or the like. The know-how information may be searchable and/or extractable by fields, applications, free keywords, or the like. Each piece of know-how information included in the know-how database 40 may be managed with identification information for identifying the know-how information.

### (User Database)

The user database 50 manages information on users using the system 1 and/or members of an organization utilizing the system 1. The user database 50 may manage the users' login names and passwords.

The user database 50 stores a skill level of each user who inquires know-how information using the user terminal 20. The user database 50 stores, for each user, a user ID, a password, a field of expertise, and proficiency information indicating the proficiency in that field. The proficiency information is indicated, for example, by the length of service in the field of expertise. The user database 50 may store contribution information indicating the contribution of each user to know-how registration in the know-how database 40. For example, when a user registers the user's own know-how in the know-how database 40, the contribution information on the user is incremented. When a user makes a proposal for modification to know-how information via the information processing apparatus 10, the contribution information on the user is incremented. When the contribution information on a user is high, the user may receive a benefit in an organization to which the user belongs. This provides an incentive for users to contribute to the accumulation and update of know-how information in the know-how database 40.

The know-how database 40 and the user database 50 do not need to be separate components from the information processing apparatus 10. The know-how database 40 and the user database 50 may be included in the memory 13 of the information processing apparatus 10. The know-how database 40 and the user database 50 may be installed in the same hardware. The know-how database 40 may be distributed across a plurality of computers within the organization.

### (Information Processing Performed by System)

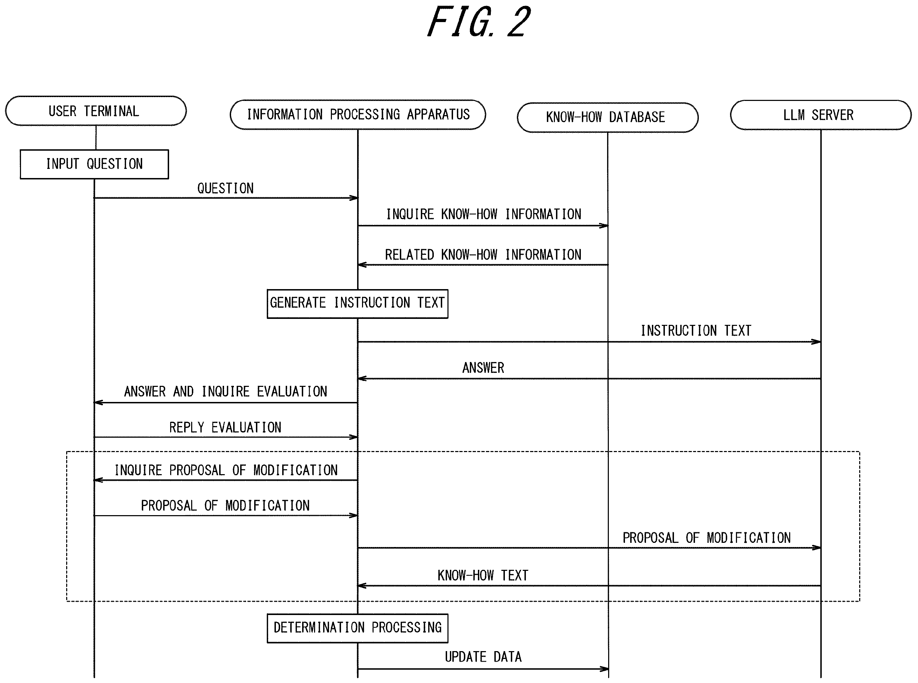

A flow of information processing performed by the system 1 will be explained based on FIG. 2.

Prior to the processing in FIG. 2, a user logs in by entering a login name and a password on the user terminal 20. The user terminal 20 may ensure the authenticity of the user through biometric authentication, such as fingerprint authentication using a fingerprint sensor or facial recognition using a camera.

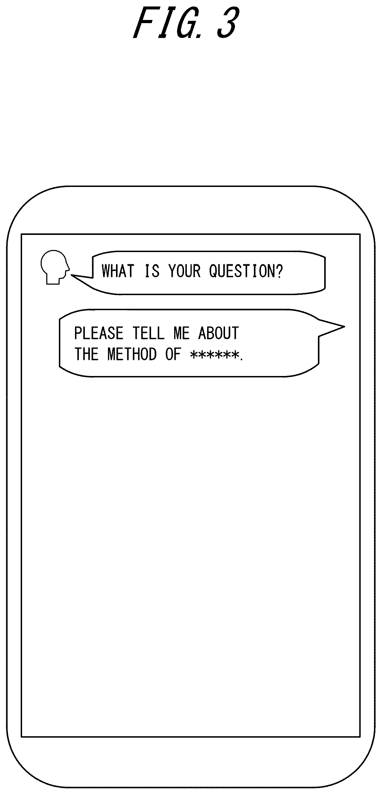

First, the user terminal 20 displays, on a display, a message to accept a question from the user. The user inputs a question to the user terminal 20. The question may be input via a keyboard, a touch panel, or a microphone. FIG. 3 illustrates an example of display on the display of the user terminal 20. The user inputs a question such as, "Please tell me about the method of .........", "What is an appropriate temperature for .........?", or "What should I be careful about when generating .........?" The format of the question is not limited to these and may be in free-form text.

As illustrated in FIG. 2, the question input by the user on the user terminal 20 is transmitted to the information processing apparatus 10. The information processing apparatus 10 inquires of the know-how database 40 for know-how information that is highly related to question content. The know-how database 40 retrieves know-how information based on the question content, and transmits one or more pieces of know-how information related to the question content to the information processing apparatus 10. The one or more pieces of know-how information transmitted from the know-how database 40 to the information processing apparatus 10 include a group of information extracted from manuals and reports related to the question content, text registered as know-how information by other users, and the like. The know-how information can be retrieved by any method from the know-how database 40. For example, the know-how database 40 may be a vector database, and the know-how information may be retrieved based on similarity to question text. For example, the information processing apparatus 10 may detect a keyword from the question, and retrieve the know-how information from the know-how database 40 using that keyword.

Upon acquiring the know-how information from the know-how database 40, the information processing apparatus 10 generates instruction text (prompt) for the LLM server 30. The instruction text includes the question, the one or more pieces of know-how information acquired from the know-how database 40, and an instruction to output an answer to the question along with information specifying know-how information used for the answer. The information processing apparatus 10 transmits the generated instruction text to the LLM server 30.

The LLM server 30 generates an answer to the question, based on the instruction text. In generating the answer, the LLM server 30 uses the one or more pieces of know-how information included in the instruction text. When the one or more pieces of know-how information included in the instruction text is text constituted of a plurality of sentences, the LLM server 30 analyzes the content of that text and specifies a part necessary for generating the answer. The LLM server 30 transmits, to the information processing apparatus 10, the answer and identification information identifying the specific know-how information used to generate the answer. The identification information may be, for example, information that can identify the know-how information at a paragraph, sentence, or clause unit of information included in the know-how database 40. The identification information may be assigned in advance to each piece of know-how information when the one or more pieces of know-how information are acquired from the know-how database 40.

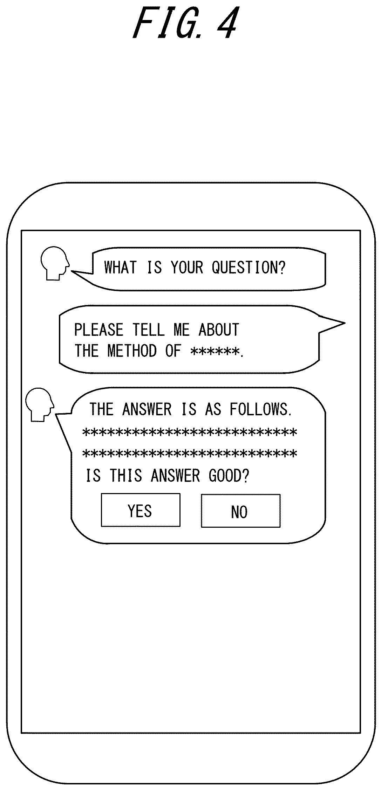

Upon acquiring the answer from the LLM server 30, the information processing apparatus 10 transmits, to the user terminal 20, the answer excluding the identification information, and causes the display of the user terminal 20 to display the answer. At this time, the information processing apparatus 10 displays an inquiry asking for the user's evaluation of the reliability of the answer alongside the display of the user terminal 20. FIG. 4 illustrates an example of display on the display of the user terminal 20. In this example, an inquiry asking whether the answer is good is displayed on the user terminal 20. The user can input an evaluation of 'good' or 'bad' for the answer by pressing a 'yes' or 'no' button on the display, which is a touch panel display, or by verbally saying 'yes' or 'no'. When the user thinks the answer is good, the user evaluates the answer as 'good'. When the user thinks the answer is questionable or contains an error, the user evaluates the answer as 'bad'. 'Good' is a first evaluation result indicating a high evaluation. 'Bad' is a second evaluation result indicating a low evaluation.

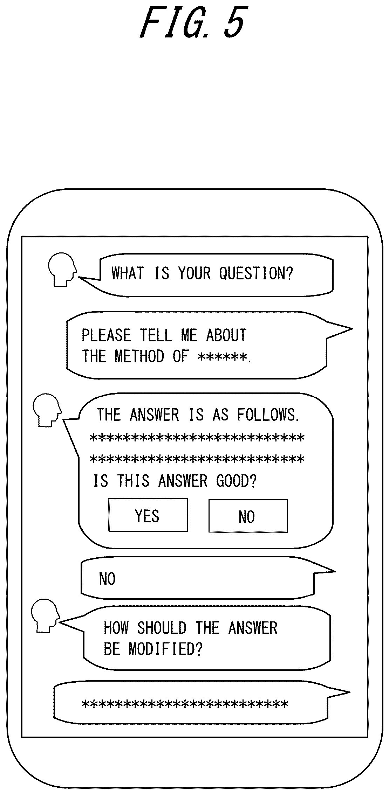

The part surrounded by a dashed line in FIG. 2 indicates processing when the user inputs a second evaluation result for the answer displayed on the user terminal 20. In this case, as illustrated in FIG. 5, the information processing apparatus 10 causes the user terminal 20 to display an inquiry asking for a proposal of modification. In response, the user can input a proposal of modification in a free format. The information processing apparatus 10 transmits, to the LLM server 30, the proposal of modification input by the user, along with instruction text to convert the proposal of modification into a style of writing suitable for being stored in the know-how database 40. The LLM server 30 performs a deletion of unnecessary parts and a necessary rewrite based on the user's proposal of modification. For example, when the user makes a proposal of modification such as 'I think 30 minutes is better than 15 minutes for heating ...,' the LLM server 30 generates know-how text such as 'Heat ... for 30 minutes.' The information processing apparatus 10 may store, in the memory 13, the know-how text as candidate text for modification and/or replacement of the know-how information. When the user inputs the first evaluation result for the answer, the processing of the part surrounded by the dashed line is not performed.

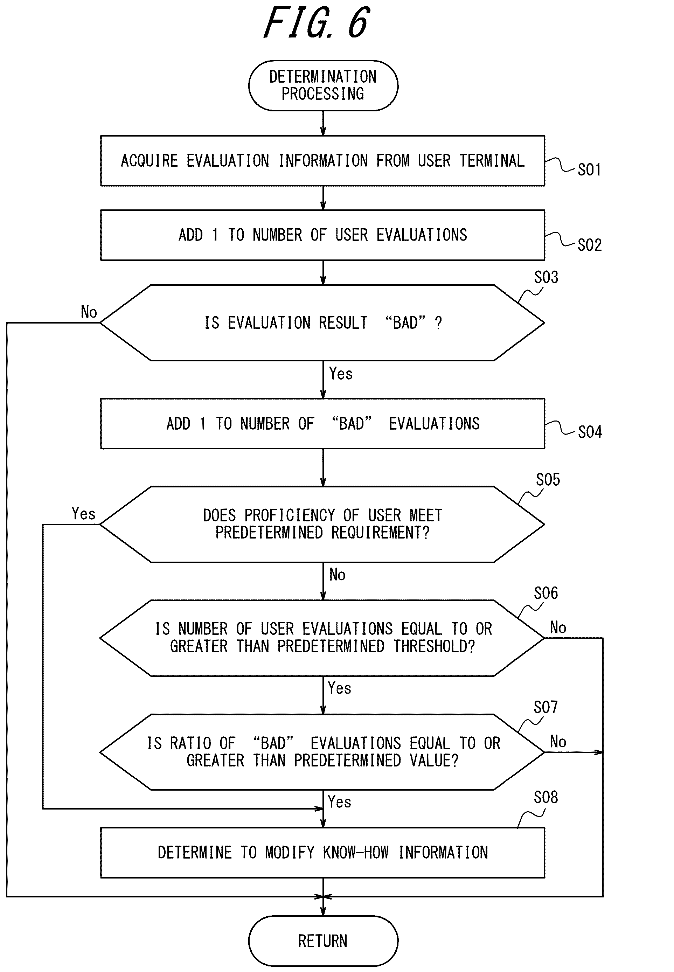

Next, the information processing apparatus 10 performs determination processing to determine whether modification to the know-how information used for the answer is necessary. As an example, the determination processing is executed by the controller 11 of the information processing apparatus 10 according to the flowchart in FIG. 6.

The controller 11 acquires evaluation information from the user terminal 20 via the communication interface 12 (S01). This processing corresponds to 'reply evaluation' in FIG. 2 from the user terminal 20 to the information processing apparatus 10. When the controller 11 receives a second evaluation result, the processing of the part surrounded by the dashed line in FIG. 2 is performed between S01 and S02.

The controller 11 adds 1 to the number of user evaluations for the know-how information identified by the identification information. The number of user evaluations indicates the cumulative number of evaluations made by users for each piece of know-how information.

When the user's evaluation result is "Good," i.e., a first evaluation result (S03: No), the controller 11 ends the determination processing. When the user's evaluation result is "Bad," i.e., a second evaluation result (S03: Yes), the controller 11 adds 1 to the number of "Bad" evaluations. The number of "Bad" evaluations is the number of second evaluation results. The number of "Bad" evaluations indicates the cumulative number of times users have evaluated "Bad" for each piece of know-how information. After S04, the controller 11 proceeds to the processing of S05.

The controller 11 retrieves and acquires, from the user database 50, proficiency information indicating the proficiency of the user who has made the evaluation, and determines whether the proficiency information meets a predetermined requirement (S05). The proficiency information is represented, for example, by the length of service in a field related to the know-how information. The predetermined requirement is, for example, a length of service of 5 years or more, or 10 years or more. When the proficiency information meets the predetermined requirement (S05: Yes), the controller 11 proceeds to the processing of S08. When the proficiency information does not meet the predetermined requirement (S05: No), the controller 11 proceeds to the processing of S06.

In S06, the controller 11 determines whether the number of user evaluations for the specific know-how information, for which the user has evaluated, is equal to or greater than a predetermined threshold. The predetermined threshold can be set to any integer of 2 or more, such as 5, 10, or 20. When the number of user evaluations is equal to or greater than the predetermined threshold (S06: Yes), the controller 11 proceeds to the processing of S07. When the number of user evaluations is less than the predetermined threshold (S06: No), the controller 11 ends the determination processing.

In S07, the controller 11 calculates the ratio of "Bad" evaluations to the number of user evaluations for the specific know-how information. When the ratio of "Bad" evaluations is equal to or greater than a predetermined value (S07: Yes), the controller 11 proceeds to the processing of S08. When the ratio of "Bad" evaluations is less than the predetermined value (S07: No), the controller 11 ends the determination processing.

In step S08, the controller 11 determines to modify the know-how information.

That is, in a case in which a highly proficient user has made a "Bad" evaluation, the controller 11 determines to modify the know-how information regardless of the other users' evaluations. In a case in which a general user with low proficiency has made a "Bad" evaluation, the controller 11 determines to modify the know-how information when the number of user evaluations is equal to or greater than the predetermined threshold and the ratio of "Bad" evaluations is equal to or greater than the predetermined value.

The determination processing in FIG. 6 illustrates an example of determination processing. The determination processing can be executed by various procedures other than the procedure illustrated in FIG. 6.

As illustrated in FIG. 2, when it has been determined as the result of the determination processing that modification to the know-how information is necessary, the information processing apparatus 10 updates the know-how information stored in the know-how database 40. The update of the know-how information includes rewriting and replacing the know-how information. The controller 11 may modify or replace the specific know-how information, which has been used to generate the answer, in the know-how database 40, using the candidate text for modification and/or replacement stored in the memory 13.

As described above, according to the present embodiment, the information processing apparatus 10 determines, based on a user's response to an answer to a question, the necessity of modification to specific know-how information used for the answer. This reduces the occurrence of the inconvenience of incorrect know-how information continuing to be stored in the know-how database 40.

In the above embodiment, since an evaluation result for the answer acquired from the user is used as the user's response, it is possible to obtain a highly accurate user response regarding the quality of the answer. The user performs a two-level evaluation of 'good' or 'bad', so it is easier for the user to select an evaluation, and analysis of the evaluation result is also easy.

The controller 11 determines the necessity of modification to the specific know-how information by statistically processing evaluation results acquired from a plurality of users, and therefore the necessity of modification to the know-how information can be determined based on an objective criterion. In particular, when the evaluations from the users the number of which is equal to or greater than a predetermined threshold are acquired and a predetermined percentage or more of the users have made a 'bad' evaluation, the controller 11 determines that modification to the know-how information is necessary. Therefore, the necessity of modification can be determined based on the responses of the plurality of users.

A user can propose modification to know-how information when, for example, the user has noticed that the know-how information displayed as an answer contains an error. The information processing apparatus 10 can update the know-how information in the know-how database 40 based on the user's proposal of modification. This allows for the rapid and efficient correction of the know-how information that contains the error.

The information processing apparatus 10 determines that modification to know-how information is necessary when proficiency information on a user who has made a 'bad' evaluation meets a predetermined requirement. This enables the rapid utilization of expertise regarding the know-how information from the highly proficient user. Using the length of service in a field of the know-how information, as a measure of the user's proficiency, allows an objective evaluation of the user's proficiency.

Additionally, the information processing apparatus 10 causes the LLM server 30 to add identification information on used know-how information to an answer acquired by input of a question, and acquires an evaluation for the answer from a user. This allows for the correction of the know-how information in the know-how database 40 when the know-how information contains an error or the like. This makes it possible to update information in a know-how database, which is external information from a large language model system, in a system that combines the large language model system and RAG.

In the above embodiment, the information processing apparatus 10 that has received a question from the user terminal 20 retrieves and acquires know-how information from the know-how database 40, and transmits the question accompanied with the know-how information to the LLM server 30. However, the flow of information processing executed by the system 1 is not limited to this form. For example, the information processing apparatus 10 that has received a question from the user terminal 20 may be configured to transmit the question to the LLM server 30, and receive, from the LLM server 30, a request for information necessary for an answer. The information processing apparatus 10 may retrieve, from the know-how database 40, know-how information requested from the LLM server 30, and transmit the know-how information to the LLM server 30.

Before accepting a question from a user at the user terminal 20, the information processing apparatus 10 may ask the user a question to narrow down the field of the question. By narrowing down the field of the question, the information processing apparatus 10 can enhance the accuracy of know-how information to be acquired from the know-how database 40.

In the above embodiment, the user evaluates an answer to a question in two levels of 'good' and 'bad.' However, a method of evaluating the answer is not limited to the two levels, and may adopt a multi-level evaluation including three levels or five levels. The user may evaluate the answer with a score from 0 to 100. These evaluation results may be analyzed using statistical methods such as averages and medians.

When modification to the know-how information is necessary, the information processing apparatus 10 may retrieve a high proficient user in the field of the know-how information from the user database 50 and transmit a message requesting modification to the know-how information, instead of making modification based on a proposal of modification from a user.

In the above embodiment, a user's response is an evaluation result for an answer to a question input by the user. However, the user's response is not limited to this. The user terminal 20 may be equipped with a camera, and the user terminal 20 or the information processing apparatus 10 may analyze the user's expression and eye movements as the user's response. For example, the user terminal 20 may read the user's reliability on the answer from the user's expression. For example, the user terminal 20 may be equipped with a timer and measure, as the user's response, the time from receiving the answer to the question until the user inputs the next input. When the user's response is stopped for a long time, the user may have doubt about the answer.

It should be noted that the present disclosure is not limited to the above embodiment, and various modifications and revisions can be implemented. For example, functions or the like included in each means, each step, or the like can be rearranged without logical inconsistency, and a plurality of means, steps, or the like can be combined into one or divided.

Examples of some embodiments of the present disclosure are described below. However, it should be noted that the embodiments of the present disclosure are not limited to these examples.
[Appendix 1] An information processing apparatus comprising:
   an acquisition interface configured to acquire a question from a user;
      and
   a controller configured to perform operations including:
      upon acquiring the question regarding know-how inputted by the user through the acquisition interface, acquiring, from a database storing a plurality of pieces of know-how information, one or more pieces of know-how information according to content of the question;
      displaying an answer to the question based on specific know-how information included in the one or more pieces of know-how information; and
      determining necessity of modification to the specific know-how information, based on a response of the user to the answer.
[Appendix 2] The information processing apparatus according to appendix 1, wherein the controller is configured to take an evaluation result for the answer acquired from the user as the response of the user to the answer.
[Appendix 3] The information processing apparatus according to appendix 2, wherein the evaluation result is selected from two-level evaluation results including a first evaluation result indicating a high evaluation and a second evaluation result indicating a low evaluation.
[Appendix 4] The information processing apparatus according to appendix 3, wherein the controller is configured to:
   further accept a proposal of modification content to the know-how information when the evaluation result is the second evaluation result; and
   when it has been determined in determining the necessity of modification that modification is necessary, modify the specific know-how information based on the proposal of the modification content.
[Appendix 5] The information processing apparatus according to appendix 3 or 4, wherein the controller is configured to determine the necessity of modification to the specific know-how information by statistically processing evaluation results acquired from a plurality of users.
[Appendix 6] The information processing apparatus according to appendix 5, wherein the controller is configured to acquire evaluations from the users the number of which is equal to or greater than a predetermined threshold, and, when the ratio of the second evaluation result is equal to or greater than a predetermined value, determine that modification to the one or more pieces of know-how information is necessary.
[Appendix 7] The information processing apparatus according to any one of appendices 3 to 6, wherein the controller is configured to, upon acquiring the second evaluation result from the user, acquire proficiency information indicating proficiency of the user, and determine that modification to the specific know-how information is necessary when the proficiency information meets a predetermined requirement.
[Appendix 8] The information processing apparatus according to appendix 7, wherein the proficiency information is the length of service in a field related to the know-how information, and when the length of service is a predetermined number of years or more, the proficiency information meets the predetermined requirement.
[Appendix 9] The information processing apparatus according to any one of appendices 1 to 8, wherein the controller is configured to acquire the answer to the question and information identifying the specific know-how information, by inputting, into a large language model system, instruction text including the question, the one or more pieces of know-how information, and an instruction to output the answer to the question along with information specifying the specific know-how information used for that answer.
[Appendix 10] An information processing method performed by an information processing apparatus, the information processing method comprising:
   when a question regarding know-how is inputted by a user, acquiring, from a database storing a plurality of pieces of know-how information, one or more pieces of know-how information according to content of the question;
   displaying an answer to the question based on specific know-how information included in the one or more pieces of know-how information; and
   determining necessity of modification to the specific know-how information, based on a response of the user to the answer.
[Appendix 11] The information processing method according to appendix 10, comprising taking an evaluation result for the answer acquired from the user as the response of the user to the answer.
[Appendix 12] The information processing method according to appendix 11, wherein the evaluation result is selected from two-level evaluation results including a first evaluation result indicating a high evaluation and a second evaluation result indicating a low evaluation.
[Appendix 13] The information processing method according to appendix 12, further comprising:
   further accepting a proposal of modification content to the know-how information when the evaluation result is the second evaluation result; and
   when it has been determined in determining the necessity of modification that modification is necessary, modifying the specific know-how information based on the proposal of the modification content.
[Appendix 14] The information processing method according to appendix 12 or 13, comprising determining the necessity of modification to the specific know-how information by statistically processing evaluation results acquired from a plurality of users.
[Appendix 15] The information processing method according to appendix 14, comprising acquiring evaluations from the users the number of which is equal to or greater than a predetermined threshold, and, when the ratio of the second evaluation result is equal to or greater than a predetermined value, determining that modification to the one or more pieces of know-how information is necessary.
[Appendix 16] The information processing method according to any one of appendices 12 to 15, comprising, upon acquiring the second evaluation result from the user, acquiring proficiency information indicating proficiency of the user, and determining that modification to the specific know-how information is necessary when the proficiency information meets a predetermined requirement.
[Appendix 17] The information processing method according to appendix 16, wherein the proficiency information is the length of service in a field related to the know-how information, and when the length of service is a predetermined number of years or more, the proficiency information meets the predetermined requirement.
[Appendix 18] The information processing method according to any one of appendices 10 to 17, comprising acquiring the answer to the question and information identifying the specific know-how information, by inputting, into a large language model system, instruction text including the question, the one or more pieces of know-how information, and an instruction to output the answer to the question along with information specifying the specific know-how information used for that answer.
[Appendix 19] A medium storing a program configured to cause a computer to execute operations, the operations comprising:
   when a question regarding know-how is inputted by a user, acquiring, from a database storing a plurality of pieces of know-how information, one or more pieces of know-how information according to content of the question;
   displaying an answer to the question based on specific know-how information included in the one or more pieces of know-how information; and
   determining necessity of modification to the specific know-how information, based on a response of the user to the answer.
[Appendix 20] The medium according to appendix 19, wherein the operations further comprise acquiring the answer to the question and information identifying the specific know-how information, by inputting, into a large language model system, instruction text including the question, the one or more pieces of know-how information, and an instruction to output the answer to the question along with information specifying the specific know-how information used for that answer.

## Claims

1. An information processing apparatus (10) comprising:
an acquisition interface (12) configured to acquire a question from a user; and
a controller (11) configured to perform operations including:
upon acquiring the question regarding know-how inputted by the user through the acquisition interface (12), acquiring, from a database (40) storing a plurality of pieces of know-how information, one or more pieces of know-how information according to content of the question;
displaying an answer to the question based on specific know-how information included in the one or more pieces of know-how information; and
determining necessity of modification to the specific know-how information, based on a response of the user to the answer.

2. The information processing apparatus (10) according to claim 1, wherein the controller (11) is configured to take an evaluation result for the answer acquired from the user as the response of the user to the answer.

3. The information processing apparatus (10) according to claim 2, wherein the evaluation result is selected from two-level evaluation results including a first evaluation result indicating a high evaluation and a second evaluation result indicating a low evaluation.

4. The information processing apparatus (10) according to claim 3, wherein the controller (11) is configured to:
further accept a proposal of modification content to the know-how information when the evaluation result is the second evaluation result; and
when it has been determined in determining the necessity of modification that modification is necessary, modify the specific know-how information based on the proposal of the modification content.

5. The information processing apparatus (10) according to claim 3, wherein the controller (11) is configured to determine the necessity of modification to the specific know-how information by statistically processing evaluation results acquired from a plurality of users.

6. The information processing apparatus (10) according to claim 5, wherein the controller (11) is configured to acquire evaluations from the users a number of which is equal to or greater than a predetermined threshold, and, when a ratio of the second evaluation result is equal to or greater than a predetermined value, determine that modification to the one or more pieces of know-how information is necessary.

7. The information processing apparatus (10) according to claim 3, wherein the controller (11) is configured to, upon acquiring the second evaluation result from the user, acquire proficiency information indicating proficiency of the user, and determine that modification to the specific know-how information is necessary when the proficiency information meets a predetermined requirement.

8. The information processing apparatus (10) according to claim 7, wherein the proficiency information is a length of service in a field related to the know-how information, and when the length of service is a predetermined number of years or more, the proficiency information meets the predetermined requirement.

9. The information processing apparatus (10) according to claim 1, wherein the controller (11) is configured to acquire the answer to the question and information identifying the specific know-how information, by inputting, into a large language model system (30), instruction text including the question, the one or more pieces of know-how information, and an instruction to output the answer to the question along with information specifying the specific know-how information used for that answer.

10. An information processing method performed by an information processing apparatus (10), the information processing method comprising:
when a question regarding know-how is inputted by a user, acquiring, from a database (40) storing a plurality of pieces of know-how information, one or more pieces of know-how information according to content of the question;
displaying an answer to the question based on specific know-how information included in the one or more pieces of know-how information; and
determining necessity of modification to the specific know-how information, based on a response of the user to the answer.

11. The information processing method according to claim 10, comprising taking an evaluation result for the answer acquired from the user as the response of the user to the answer.

12. The information processing method according to claim 11, wherein the evaluation result is selected from two-level evaluation results including a first evaluation result indicating a high evaluation and a second evaluation result indicating a low evaluation.

13. The information processing method according to claim 10, comprising acquiring the answer to the question and information identifying the specific know-how information, by inputting, into a large language model system (30), instruction text including the question, the one or more pieces of know-how information, and an instruction to output the answer to the question along with information specifying the specific know-how information used for that answer.

14. A medium storing a program configured to cause a computer to execute operations, the operations comprising:
when a question regarding know-how is inputted by a user, acquiring, from a database (40) storing a plurality of pieces of know-how information, one or more pieces of know-how information according to content of the question;
displaying an answer to the question based on specific know-how information included in the one or more pieces of know-how information; and
determining necessity of modification to the specific know-how information, based on a response of the user to the answer.

15. The medium according to claim 14, wherein the operations further comprise acquiring the answer to the question and information identifying the specific know-how information, by inputting, into a large language model system (30), instruction text including the question, the one or more pieces of know-how information, and an instruction to output the answer to the question along with information specifying the specific know-how information used for that answer.
